# EUROPEAN PATENT SPECIFICATION

(11) **EP 2 672 609 B1**
(45) Date of publication and mention of the grant of the patent: **03.11.2021**
(21) Application number: 12004253.6
(22) Date of filing: 04.06.2012
(51) Int. Cl.: H02K 1/14, H02K 3/52, H02K 15/06

(54) **Three-phase motor structure**
Dreiphasenmotorstruktur
Structure de moteur triphasée

(43) Date of publication of application: 11.12.2013
(73) Proprietor: Herng Shan Electronics Co., Ltd., Kaoshiung City 83162 (TW)
(72) Inventor: Chang, Nai-Hsin, Kaohsiung (TW)
(74) Representative: Bandpay & Greuter

(56) References cited:
- EP-A1- 1 315 268
- EP-A2- 1 583 201
- US-A1- 2004 124 732
- US-B1- 6 404 095
- None

## Description

### BACKGROUND OF THE INVENTION

### 1. Field of the Invention

The present invention relates to a three-phase motor structure and a manufacturing method thereof. More particularly, the present invention relates to a brushless three-phase motor structure with a sectional stator.

### 2. Description of the Related Art

U.S. Patent Application Publication No. 20080143210, entitled "Three-phase motor stator," discloses a three-phase motor stator including at least one plate board. The plate board has a circular hole. A plurality of pole-teeth protrudes from the rim of the circular hole and the pole-teeth are symmetric. In fact, the three-phase motor stator is an inner stator core suitable for driving an outer rotor ring.

Another U.S. Patent Application Publication No. 20090315428, entitled "Lamination of stator of three-phase motor for increasing winding space," discloses a stator of a three-phase motor having a core ring and multiple winding frames. However, the three-phase motor stator is an inner stator core suitable for driving an outer rotor ring.

Another Taiwanese Patent Publication No. M335869, entitled "Three-phase motor stator with an increased winding space," discloses a three-phase motor stator. However, three-phase motor stator is an inner stator core which is suitable for driving an outer rotor ring.

Another U.S. Patent No. 7,064,470, entitled "Three-phase motor," discloses a three-phase motor having an outer ring-shaped stator and an inner rotor core. Inner poles are integrated and provided on an inner ring edge of the outer ring-shaped stator for wire winding. However, the integrated inner poles will reduce the wire winding speed.

Another U.S. Patent No. 7,646,127, entitled "Winding for three-phase motor," also discloses a three-phase motor having an outer ring-shaped stator and an inner rotor core. Inner poles are integrated and provided on an inner ring edge of the outer ring-shaped stator for wire winding. However, the integrated inner poles will reduce the wire winding speed.

US 6 404 095 B1 discloses an assembled type motor outer stator for improving the operation efficiency of a motor, and thus the volume occupy in the motor wire seat exciting coil is improved.

US 2004/124732 A1 discloses a stator component for an inner rotor motor which has a ring-shaped stator coil flux guide and a number of pole shoes extending inwardly from the central, inner opening of the stator coil flux guide, the stator component being divided into several stator sections, each stator section consisting of all the pole shoes of one phase.

As is described in greater detail below, the present invention provides an improved three-phase motor structure. An outer stator ring frame and a series of pole-tooth units are prepared to be assembled to form a sectional stator for speeding wire winding operation. Before assembled, windings are formed on pole teeth by a wire winding machine for speeding a wire winding process in such a way as to mitigate and overcome the above problem.

### SUMMARY OF THE INVENTION

The primary objective of this invention is to provide a manufacturing method of a three-phase motor structure as set forth in appended claims 1 or 2.

Further scope of the applicability of the present invention will become apparent from the detailed description given hereinafter. However, it should be understood that the detailed description and specific examples, while indicating preferred embodiments of the invention, are given by way of illustration only, since various modifications will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIGS. 1 and 2 are schematic views of an outer stator ring frame and pole tooth units applied in a three-phase motor structure in accordance with a preferred embodiment of the present invention.
FIG 3 is a schematic view of the pole tooth units combined with isolation jackets applied in the present invention.
FIG. 4 is a schematic view of the pole tooth units engaged with the outer stator ring frame applied in the present invention.
FIGS. 5 and 6 are schematic views of a printed circuit board and an inner rotor core applied in the present invention.
FIG 7 is a schematic view of a sectional stator of the present invention.
FIG. 8 is a sectional view of the three-phase motor structure of the present invention.

### DETAILED DESCRIPTION OF THE INVENTION

It is noted that a three-phase motor structure in accordance with the present invention is suitable for various brushless three-phase motor structure, for example: 9 pole teeth or 12 pole teeth, which are not limitative of the present invention. The three-phase motor structure in accordance with the present invention is suitable for applying in various electrical devices, for example: fan motor, which are not limitative of the present invention.

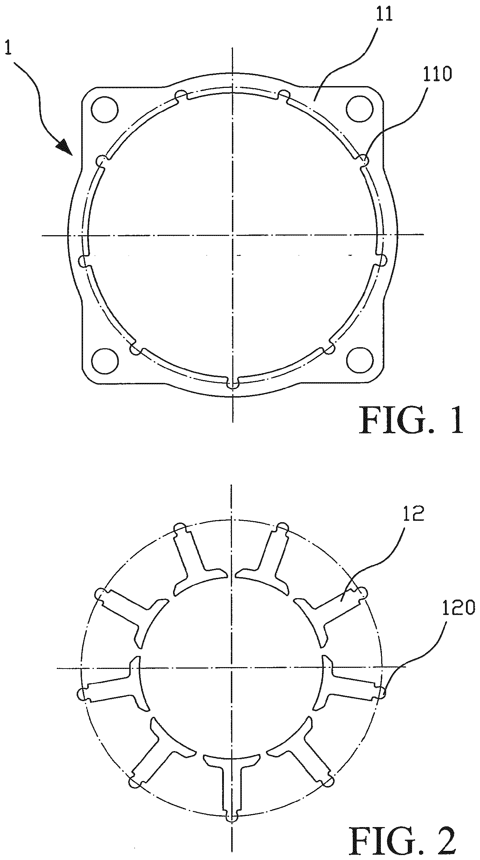

Referring to FIGS. 1 and 2, the three-phase motor structure includes a sectional stator 1 having an outer stator ring frame 11 and a series of pole tooth units 12. The outer stator ring frame 11 and the pole tooth units 12 are made of magnetically conductive materials or other similar materials, for example: silicon steel plates. The outer stator ring frame 11 has an inner circumferential flange (dotted line in FIG. 1) surrounding a longitudinal axis to form an axial hole. The inner flange of the outer stator ring frame 11 corresponds to the pole tooth units 12 so that the outer stator ring frame 11 and the pole tooth units 12 are assembled to form the sectional stator 1.

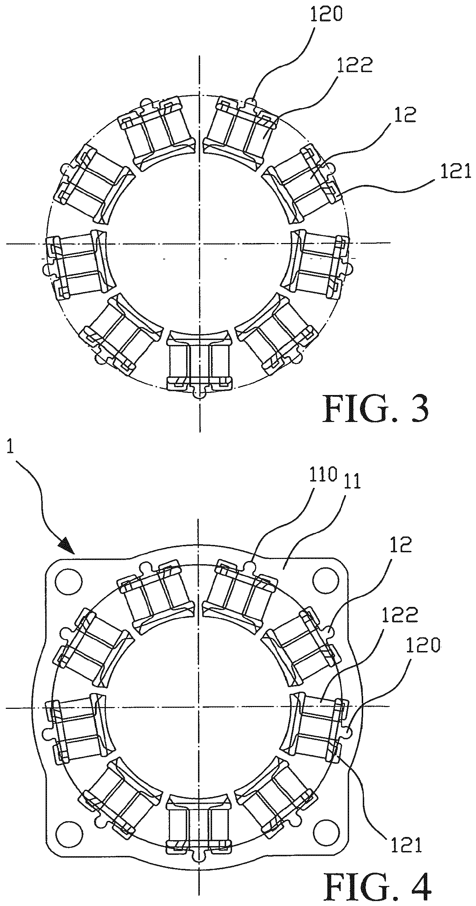

Turning now to FIGS. 2 and 3, the pole tooth units 12 are detachable from the outer stator ring frame 11 for disassembly and include a plurality of pole teeth, for example: 9 pole teeth. When assembled, the pole tooth units 12 are deployed along the inner flange of the outer stator ring frame 11 and are equi-spaced apart. Each of the pole tooth units 12 has an outer flange (dotted line in FIG. 2) located on the pole tooth. The outer flange of the pole tooth unit 12 corresponds to the inner flange of the outer stator ring frame 11. Furthermore, each pole tooth of the pole tooth units 12 has an inner pole face with respect to the longitudinal axis.

With continued reference to FIGS. 2 and 3, the pole tooth units 12 include an isolation device 121 and a winding set 122, and the isolation device 121 is provided between the winding set 122 and the pole teeth. In addition, the isolation device 121 includes a plurality of isolation jackets while the winding set 122 includes a plurality of wire windings and a plurality of wire connection ends, as best shown in FIG. 3, such that each pole tooth is provided with at least one isolation jacket and at least one wire winding. Prior to assembling the sectional stator 1, the winding set 122 is wound on each pole teeth of the pole tooth units 12 by a wire winding machine and subsequently the isolation device 121 is further formed on the pole tooth units 12 so as to speed the wire winding process (entire assembling process).

Turning now to FIGS. 1 through 4, in assembling, each outer flange of the pole tooth units 12 is correspondingly engaged with the inner flange of the outer stator ring frame 11 by magnetic conductive materials (paste), for example. The outer stator ring frame 11 includes at least one first engaging portion 110 while the pole tooth units 12 include at least one second engaging portion 120 to engage with the first engaging portion 110. Preferably, the first engaging portion 110 is provided on the inner flange of the outer stator ring frame 11, and the second engaging portion 120 is provided on the outer flanges of the pole tooth units 12.

Referring again to FIGS. 1 and 2, the first engaging portion 110 is selected from a recession while the second engaging portion 120 is selected from a protrusion. In an alternative embodiment, the first engaging portion 110 is selected from a protrusion while the second engaging portion 120 is selected from a recession.

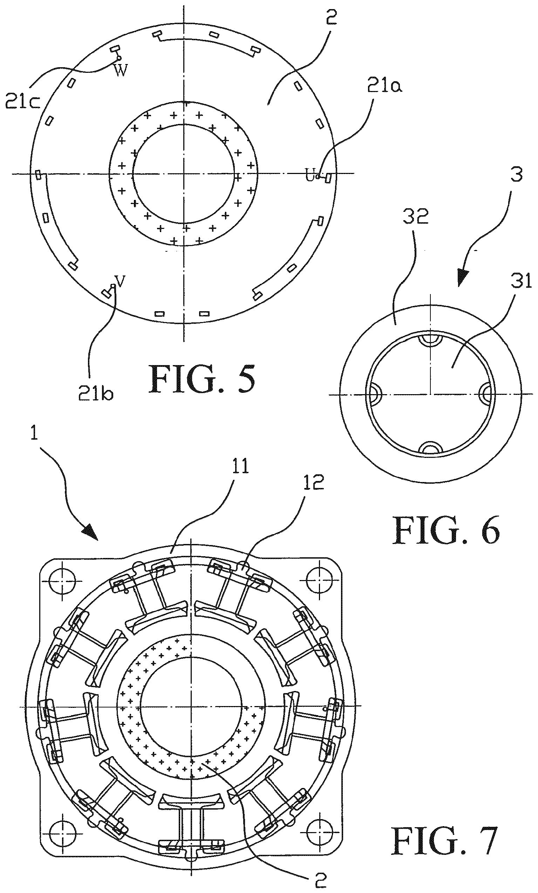

Turning now FIG. 5, the three-phase motor structure further includes a printed circuit board 2 including a plurality of contact points to correspondingly connect with the wire connection ends of the winding set 122. By way of example, the contact points include a first phase (U phase) contact point 21a, a second phase (V phase) contact point 21b and a third phase (W phase) contact point 21c. In assembling, the contact points are correspondingly connected with the wire connection ends of the winding set 122 by welding, for example.

Turning now FIG. 6, the three-phase motor structure further includes an inner rotor core 3 comprised of a rotor 31 and a magnet 32. In assembling, the inner rotor core 3 extends through the sectional stator 1 such that the inner pole faces of the pole tooth units 12 correspond to the magnet 32 for driving the motor.

Turning now FIG. 7, after assembled the sectional stator 1, the printed circuit board 2 is further attached to a side of the sectional stator 1 and electrically connects therewith. In order to improve the assembling operation, the contact points of U, V and W phases are provided with assembling marks shown at "U", "V" and "W" on the printed circuit board 2 for perfect alignment.

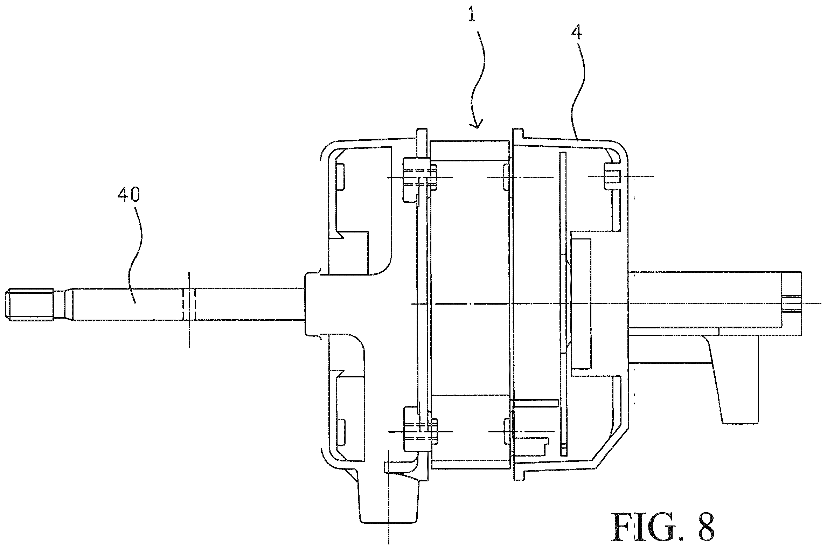

Turning now FIG. 8, the combined structure of the stator 1, the printed circuit board 2 and the inner rotor core 3 is provided in a housing 4. When the stator 1 is operated to drive the inner rotor core 3, an axis 40 combined with the inner rotor core 3 rotates synchronously. The housing 4 can be achieved in the known manner so that the detailed descriptions may be omitted.

Although the invention has been described in detail, it will be understood by one of ordinary skill in the art that various modifications can be made without departing from the scope of the invention, as set forth in the appended claims.

## Claims

1. A manufacturing method of a three-phase motor structure comprising:
providing an inner flange of an outer stator ring frame (11) with at least one first engaging portion (110), the outer stator ring frame (11) having an inner circumferential flange surrounding a longitudinal axis to form an axial hole,
providing a series of detachable pole tooth units (12), with each of the detachable pole tooth units (12) including at least one second engaging portion (120), the outer stator ring frame (11) and the pole tooth units (12) being made of magnetically conductive materials, the inner flange of the outer stator ring frame (11) corresponding to the pole tooth units(12),
winding a plurality of wires on the series of detachable pole tooth units (12) to provide a plurality of windings thereon;
assembling the series of detachable pole tooth units (12) with the plurality of windings thereon with the outer stator ring frame (11) to form a sectional stator (1) by engaging the at least one second engaging portion (120) with the at least one first engaging portion (110) for assembling, wherein the assembling comprises providing magnetic conductive materials between the at least one first engaging portions (110) of the outer stator ring frame (11) and the at least one second engaging portions (120) of the pole tooth units (12);
attaching a printed circuit board (2) to a predetermined position of a side of the sectional stator (1);
welding wire connection ends of the plurality of windings to contact points (21a, 21b, 21c) provided on the printed circuit board (2); and
forming assembling marks of the contact points on the printed circuit board (2) by forming assembling marks "U", "V" and "W" on the printed circuit board (2) provided for the contact points of U, V and W phases of the three-phase motor structure.

2. The method as defined in claim 1, further comprising: forming isolation devices on the windings of the pole tooth units (12).

## Patentansprüche

1. Verfahren zur Herstellung einer Dreiphasenmotorstruktur, umfassend:
Bereitstellen eines inneren Flansches eines äußeren Statorringrahmens (11) mit mindestens einem ersten Eingriffsabschnitt (110), wobei der äußere Statorringrahmen (11) einen Innenumfangsflansch aufweist, der eine Längsachse umgibt, um ein axiales Loch zu bilden,
Bereitstellen einer Reihe von lösbaren Polzahneinheiten (12), wobei jede der Polzahneinheiten (12) mindestens einen zweiten Eingriffsabschnitt (120) umfasst, der äußere Statorringrahmen (11) und die Polzahneinheiten (12) aus magnetisch leitenden Materialien hergestellt sind, und der innere Flansch des äußeren Statorringrahmens (11) den Polzahneinheiten (12) entspricht,
Wickeln einer Mehrzahl von Drähten auf die Reihe von lösbaren Polzahneinheiten (12), um eine Mehrzahl von Wicklungen darauf bereitzustellen;
Zusammenbauen der Reihe von lösbaren Polzahneinheiten (12) mit der Mehrzahl von Wicklungen darauf mit dem äußeren Statorringrahmen (11), um einen mehrteiligen Stator (1) zu bilden, indem der mindestens eine zweite Eingriffsabschnitt (120) mit dem mindestens einen ersten Eingriffsabschnitt (110) für den Zusammenbau in Eingriff gebracht wird, wobei das Zusammenbauen ein Bereitstellen von magnetisch leitenden Materialien zwischen dem mindestens einen ersten Eingriffsabschnitt (110) des äußeren Statorringrahmens (11) und dem mindestens einen zweiten Eingriffsabschnitt (120) der Polzahneinheiten (12) umfasst;
Anbringen einer gedruckten Leiterplatte (2) in einer vorbestimmten Position einer Seite des mehrteiligen Stators (1);
Schweißen von Drahtverbindungsenden der Mehrzahl von Wicklungen an Kontaktpunkte (21a, 21b, 21c), die auf der gedruckten Leiterplatte (2) vorgesehen sind; und
Bilden von Zusammenbaumarkierungen der Kontaktpunkte auf der gedruckten Leiterplatte (2) durch Bilden von Zusammenbaumarkierungen "U", "V" und "W" auf der gedruckten Leiterplatte (2), die für die Kontaktpunkte der Phasen U, V und W der Dreiphasenmotorstruktur vorgesehen sind.

2. Verfahren nach Anspruch 1, ferner umfassend: Bilden von Trennvorrichtungen auf den Wicklungen der Polzahneinheiten (12).

## Revendications

1. Procédé de fabrication d'une structure de moteur triphasé comprenant :
la fourniture d'un rebord interne d'un cadre annulaire de stator externe (11) avec au moins une première partie de mise en prise (110), le cadre annulaire de stator externe (11) ayant un rebord circonférentiel interne entourant un axe longitudinal pour former un trou axial,
la fourniture d'une série d'unités de dent polaire détachables (12), chacune des unités de dent polaire détachables (12) incluant au moins une seconde partie de mise en prise (120), le cadre annulaire de stator externe (11) et les unités de dent polaire (12) étant constituées de matériaux magnétiquement conducteurs, le rebord interne du cadre annulaire de stator externe (11) correspondant aux unités dent polaire (12),
l'enroulement d'une pluralité de fils sur la série d'unités de dent polaire détachables (12) pour fournir une pluralité d'enroulements sur celles-ci ;
l'assemblage de la série d'unités de dent polaire détachables (12) avec la pluralité d'enroulements sur celles-ci avec le cadre annulaire de stator externe (11) pour former un stator sectionnel (1) en mettant en prise l'au moins une seconde partie de mise en prise (120) avec l'au moins une première partie de mise en prise (110) pour assemblage, dans lequel l'assemblage comprend la fourniture de matériaux conducteurs magnétiques entre les au moins une premières parties de mise en prise (110) du cadre annulaire de stator externe (11) et les au moins une secondes parties de mise en prise (120) des unités de dent polaire (12) ;
la fixation d'une carte de circuit imprimé (2) à une position prédéterminée d'un côté du stator sectionnel (1) ;
le soudage d'extrémités de liaisons de fil de la pluralité d'enroulements aux points de contact (21a, 21b, 21c) prévus sur la carte de circuit imprimé (2) ; et
la formation de repères d'assemblage des points de contact sur la carte de circuit imprimé (2) par formation de repères d'assemblage « U », « V » et « W » sur la carte de circuit imprimé (2) prévus pour les points de contact des phases U, V et W de la structure de moteur triphasé.

2. Procédé selon la revendication 1, comprenant en outre : la formation de dispositifs d'isolement sur les enroulements des unités de dent polaire (12).
